# EUROPÄISCHE PATENTSCHRIFT

(11) **EP 3 671 304 B1**
(45) Veröffentlichungstag und Bekanntmachung des Hinweises auf die Patenterteilung: **25.01.2023**
(21) Anmeldenummer: 19217309.4
(22) Anmeldetag: 18.12.2019
(51) Int. Cl.: F21S 41/153, F21S 41/20, F21S 41/663, G02B 27/00, G02B 19/00

(54) **VERFAHREN ZUR KONSTRUKTION EINES OPTISCHEN ELEMENTS FÜR EINEN KRAFTFAHRZEUGSCHEINWERFER**
METHOD FOR CONSTRUCTING AN OPTICAL ELEMENT FOR A MOTOR VEHICLE HEADLIGHT
PROCÉDÉ DE CONSTRUCTION D'UN ÉLÉMENT OPTIQUE POUR UN PHARE DE VÉHICULE AUTOMOBILE

(30) Priorität: 19.12.2018 DE 102018132866
(43) Veröffentlichungstag der Anmeldung: 24.06.2020
(73) Patentinhaber: Marelli Automotive Lighting Reutlingen (Germany) GmbH, 72762 Reutlingen (DE)
(72) Erfinder: Kiesel, Markus, 72762 Reutlingen (DE)
(74) Vertreter: DREISS Patentanwälte PartG mbB

(56) Entgegenhaltungen:
- EP-A1- 2 837 962
- EP-A2- 2 587 125
- US-A1- 2007 219 760
- US-A1- 2011 235 356

## Beschreibung

Die vorliegende Erfindung betrifft ein Verfahren zur Konstruktion eines optischen Elements für einen Kraftfahrzeugscheinwerfer nach dem Oberbegriff des Anspruchs 1. Ein solches Verfahren ist aus der EP 2 837 962 A1 bekannt. Aus der US 2011/235356 A1 ist ein Kraftfahrzeugscheinwerfer mit einer Matrix-Halbleiterlichtquelle und einem entsprechenden Computer-simulierten Lichtverteilungsmuster bekannt. Eine Vorrichtung und ein Verfahren zur Entwicklung und Konstruktion von Freiform-Reflektoren ist aus der US 2007/219760 A1 bekannt. Und aus der EP 2 587 125 A2 ist ein Scheinwerferprojektionsmodul für ein Kraftfahrzeug zur Erzeugung einer vorgegebenen Lichtverteilung bekannt.

Aus der DE 10 2008 023 551 A1 ist ein Verfahren zur Konstruktion eines optischen Elements für einen Kraftfahrzeugscheinwerfer bekannt, der eine vorbestimmte Soll-Lichtverteilung erzeugen soll, welches optische Element eine optische Fläche aufweist, die von wenigstens einer Lichtquelle des Kraftfahrzeugscheinwerfers beleuchtbar ist und die das Licht der wenigstens einen Lichtquelle in eine Ist-Lichtverteilung verteilt. Bei dem bekannten Verfahren werden auf einer Oberfläche einer Projektionslinse Bereiche mit optischer Streuwirkung ausgebildet. Die Bereiche sind in ein periodisches Raster von Einzelzellen unterteilt, die jeweils ein Strukturelement aufweisen, welches eine gezielte Streuung des hindurchtretenden Lichtes bewirkt. Die Strukturelemente werden aus einer mathematischen Grundfunktion erzeugt, die eine einzelne Erhebung, bzw. Vertiefung beschreibt. Es werden mathematische Funktionen eingesetzt, die zu einem Strukturelement führen, das eine geeignete Lichtstreuung mit einer zu größeren Ablenkwinkeln hin abnehmenden Lichtmenge bewirkt. Als geeignete Funktionen werden unter anderem Spline-Funktionen genannt.

Aktuelle Scheinwerfersysteme müssen stark veränderte Anforderungen an ihre Funktionalität und die Qualität des Lichtes erfüllen. Dabei stehen die Sicherheit aller Verkehrsteilnehmer und die aktive Unterstützung des Fahrers besonders im Blickfeld. Diese neuen Anforderungen werden einerseits durch gesetzliche Vorgaben, andererseits stark durch Vorgaben der Automobilhersteller definiert.

Die Komplexität der Systeme steigt, gleichzeitig wird immer mehr Wert auf eine sehr hohe Qualität des Lichtes gelegt. Wichtige Merkmale sind hier die Helligkeit, die Homogenität oder die Abstimmung von Komponenten des Lichtes untereinander, z.B. von Teilen eines modularen Abblendlichtes oder ein möglichst unmerkliches Überblenden zwischen den einzelnen Abbildungen der Lichtquellen.

Ein wesentlicher Grund für die Erhöhung der Komplexität sind aktuell adaptive Lichtverteilungen, die kamerabasiert gesteuert werden und die im Folgenden auch als Matrix-Lichtverteilung bezeichnet werden. Diese Matrix-Lichtverteilungen zeichnen sich dadurch aus, dass einzelne Segmente der Lichtverteilung gezielt gedimmt oder abgedunkelt werden können, um Blendungen anderer Verkehrsteilnehmer zu vermeiden.

Besonders diese Matrix-Lichtverteilungen, aber auch reine Abblendlichtfunktionen oder andere Teillichtverteilungen, stellen dabei ganz neue Anforderungen an die Funktion, Präzision und Leistungsfähigkeit der verwendeten optischen Komponenten. Der Einsatz von spezialisierten geometrischen Modulationen der optischen Flächen dieser Systeme, kann die geforderten Eigenschaften erzeugen oder verbessern. Dadurch werden diese Modulationen zu einem elementaren Teil des Gesamtsystems.

Dabei sind die Freiformstrukturen auf sämtliche optisch wirksamen Flächen anwendbar, wie z.B. auf Projektionslinsen oder auf Vorsatzoptiken oder auf Reflektorflächen.

Bei bisherigen Abblendlichtfunktionen wurde ein definierter Hell-Dunkel-Übergang gefordert. Dieser kann auf vielfältige Arten und Weisen erreicht werden, die sich aber hauptsächlich auf Lichtfunktionen mit Abblendlichtcharakteristik beziehen:
Die DE 20 2004 005 936 U1 zeigt Bereiche verschiedener Streuwirkung auf Glaslinsen, wodurch ein vorgegebenes Beleuchtungsmuster erzielt wird. Recht ähnlich wird nach der DE 10 2007 049 835 A1 vorgegangen, die unterschiedlich strukturierte Zonen auf Glaslinsen zur Lichtaufweichung an einem Hell-Dunkel-Übergang vorschlägt. Aus der JP 2015-035337 ist ein Einsatz netzartig strukturierter Kugelflächen zur Aufweichung eines Hell-Dunkel-Übergangs bekannt. Aus der DE 10 2007 014 676 84 sind Wellenzonen bekannt.

Zu diesem Zweck wird auch eine Projektionslinse mit unterschiedlichen, runden Mikrostrukturen in EP 2 680 047 A1 vorgeschlagen. Die JP 2014-235836 A zeigt eine Linse mit prismatischen Elementen, die bei geringer Blendung die Sichtbarkeit des Fahrzeugs absichern und zugleich den Hell-Dunkel-Übergang aufweichen. Eine andere Zielsetzung hat eine aus der JP 2014-157733 A bekannte optische Linse zur Homogenisierung einer Lichtverteilung. Die dort angedachte Strukturierung der Linse dient vornehmlich der Homogenisierung der Lichtverteilung (hier speziell zur Vermeidung von sichtbaren Streifen auf der Fahrbahn). Aus der EP 3 214 364 A1 ist auch eine Linse mit zwei verschiedenen Mikrostruktur-Zonen zur Aufweichung des Lichtes bekannt. Geometrische Elemente zur Aufweichung eines Hell-Dunkel-Übergangs werden auch in der DE 10 2012 107 427 A1 gezeigt.

Nur wenige Veröffentlichungen sind bisher zu den neuen Matrix-Lichtverteilungen zu finden: Sehr gezielt beeinflussbare Hell-Dunkel-Übergänge sind aus der oben bereits genannten DE 10 2008 023551 A1 bekannt. Hier werden mathematisch definierte geometrische Elemente auf Linsenflächen eingesetzt. In dieser Schrift geht die Funktionalität der vorgeschlagenen Strukturen erstmals auch über Abblendlichtfunktionen hinaus. Dort werden bereits Matrix-Systeme erwähnt, für deren Lichthomogenisierung der dort gezeigte Gegenstand ebenfalls eingesetzt werden kann.

Die Homogenisierung einer Matrix-Lichtverteilung über diverse Sorten von Mikropyramiden wird in der DE 2010 027 322 A1 vorgeschlagen. Aus den Schriften WO 2015/031925 A1 und EP 3 042 118 A1 sind Mikrostrukturen bekannt, die sowohl zur Aufweichung eines Hell-Dunkel-Übergangs, als auch zur Homogenisierung von Matrix-Lichtverteilungen eingesetzt werden können.

Aus der JP 201 722 84 32 A ist eine Linse mit ausgedehnten, horizontal bzw. vertikal orientierten prismatischen Flächen bekannt. Dabei ist jeweils eine Richtung einer optischen Fläche zugeordnet.

Ähnliche Mikrostrukturen, die aber nur einen Teil einer Projektionslinse bedecken, sind aus der US 9 328 888 B2 bekannt. Sie dienen der Aufweichung der scharfen Kanten der Lichtverteilung.

Im Folgenden ist mit dem Begriff Streuung eine gewollte quantitative Kombination von unterschiedlichen Brechungswinkeln (bei brechenden Flächen) bzw. Reflexionswinkeln (bei reflektierenden Flächen) gemeint.

Bei praktisch allen aktuell bekannten Matrix-Lichtsystemen und auch bei vielen neuen Lichtmodulen für Abblendlicht und Fernlicht ist die im Stand der Technik aufgezeigte Funktionalität nicht mehr ausreichend: Die dort vorgeschlagenen Mikrostrukturen und Geometrien vermögen nur eine unzureichend anisotrope Streuung des Lichtes hervorzurufen. Die erzeugten Ablenkwinkel unterscheiden sich zu wenig und dienen mehr oder weniger nur der gezielten Aufweichung des Lichtes. Der Verlauf der Intensität längs einer Streubreite lässt sich mit bisherigen Mitteln nur begrenzt steuern. Diese Beschränkungen der Streuung sind bei Abblendlichtverteilungen meist unproblematisch. Bei Matrix-Lichtverteilungen sind diese Beschränkungen jedoch problematisch.

Die in den oben genannten Schriften beschriebenen Strukturen sind z.T. recht aufwändig zu erstellen oder zu handhaben. Es bestehen auch hohe Risiken für Fehler und Ungenauigkeiten, die durch Datenkonvertierung oder Übertragungsfehler zwischen Entwurf und Fertigung entstehen. Die Absicherung der Herstellbarkeit ist teilweise schwer zu bewerkstelligen. Auch der zeitliche Aufwand ist in der Regel erheblich und vor dem Hintergrund knapper Terminpläne als kritisch zu bewerten.

Bisherige Mikrostrukturen sind kaum an die Möglichkeiten der aktuellen Fertigung angepasst. Dadurch werden diese Möglichkeiten nicht ausgeschöpft. Fertigungstechnische Aspekte werden zum Beispiel erst spät im Entwicklungsprozess berücksichtigt.

Auch die Erfüllung gesetzlicher Vorgaben (Photometrische Messwerte in der Lichtverteilung, insbesondere in der Nähe des Hell-Dunkel-Übergangs oder im sogenannten Overhead-Bereich, bei Null bis vier Grad oberhalb des Horizontes, stellt sich mit bisherigen Mikrostrukturen teilweise als nicht machbar dar und erfordert zusätzliche, aufwändige Maßnahmen, z.T. sogar separate Bauteile.

Die Aufgabe der vorliegenden Erfindung besteht in der Angabe eines Verfahrens zur Konstruktion eines optischen Elements für einen Kraftfahrzeugscheinwerfer, mit dem die genannten Nachteile vermieden werden.

Diese Aufgabe wird mit den Merkmalen des Anspruchs 1 gelöst. Dabei unterscheidet sich das erfindungsgemäße Verfahren vom eingangs genannten Stand der Technik durch die kennzeichnenden Merkmale des Anspruchs 1.

Mit der Erfindung wird ein Verfahren angegeben, das die komplette Generierung und Handhabung der Daten für in Form von Oberflächenelementmodellen entworfene Modulationen der optischen Fläche ermöglicht. Die Auslegung und Berechnung der optischen Fläche, die Analyse ihrer lichttechnischen Wirkung und die Bewertung ihrer Herstellbarkeit sowie die komplette Datenerzeugung können mit einem einheitlichen Verfahren in kurzer Zeit durchgeführt werden. Idealerweise werden diese Vorgaben gleichzeitig mit den oben erwähnten Aufgaben erfüllt. Dadurch können komplette Bauteile oder weitere Maßnahmen eingespart oder vereinfacht werden.

Wenn das gewünschte Ergebnis erreicht ist, werden die Daten direkt und mathematisch exakt für die Erstellung von Werkzeugen zur Verfügung gestellt. Mit diesem Verfahren wird die gesamte Handhabung der zunächst als Oberflächenelementmodelle berechneten Modulationen der optischen Fläche abgewickelt. Dies schließt insbesondere den Entwurf der Oberflächenmodelle und deren Übertragung in eine optische Simulationsumgebung zur lichttechnischen Optimierung ein. Wenn das gewünschte Ergebnis erreicht ist, werden die Daten direkt und mathematisch exakt für die Erstellung von Werkzeugen zur Verfügung gestellt.

Durch diese Erzeugung und Übergabe der Daten wird die Herstellbarkeit abgesichert. Es wird insbesondere sichergestellt, dass beim Entwurf und der Optimierung der Oberflächenelementmodelle immer mit den exakt gleichen Daten gearbeitet wird, wie sie auch bei deren späterer Herstellung verwendet werden. Es treten keine Übertragungsfehler oder Ungenauigkeiten mehr auf; alle Datenstände sind identisch und mathematisch exakt.

Die erfindungsgemäße Konstruktion des optischen Elements erlaubt eine verbesserte Nutzung der Möglichkeiten aktueller Matrix-Scheinwerfer. In horizontaler Richtung kann ein perfekter Übergang zwischen den Segmenten einer Matrix-Lichtverteilung erzielt werden. In vertikaler Richtung kann mit einer Streuung nach unten ein idealer Aufsetzpunkt in einer Abblendlichtverteilung erzeugt werden, und zugleich kann durch eine nach oben gerichtete Streuung die Segmenthöhe vergrößert werden. Bei mehrzeiligen Matrix-Lichtverteilungen kann eine klarer definierte Zeilentrennung erreicht werden.

Die Erfindung ermöglicht eine stark anisotrope Streuung des Lichtes. Unter einer anisotropen Streuung wird hier verstanden, dass die Umlenkung des Lichtes der beleuchtenden Lichtquelle durch die optische Fläche in unterschiedlichen Richtungen stark unterschiedlich ist. Zum Beispiel soll für eine Fernlichtfunktion die Streuung in der vertikalen Richtung nach oben mit größeren Ablenkwinkeln erfolgen als nach unten. Durch eine anisotrope Streuung des Lichtes wird es möglich, mehrere Eigenschaften des Lichtes gleichzeitig gezielt zu beeinflussen. Die Streuung unterscheidet sich hierbei nicht nur im erzielten Ablenkwinkel, sondern auch die Menge des gestreuten Lichtes soll für verschiedene Ablenkwinkel unterschiedlich sein können. Es wird also der Intensitätsverlauf innerhalb der Streuung gezielt gesteuert. Die Erfindung erlaubt es auch, lokal unterschiedliche Modulationen der optischen Fläche ansatz- und nahtlos aneinander anschließen zu lassen. Hier kann man erstmals von einer gezielten Lichtformung durch als Oberflächenelementmodelle entworfene Freiformstrukturen auf optischen Flächen sprechen.

Die mit dem erfindungsgemäßen Verfahren entworfenen optischen Flächen bieten die längst überfällige Erweiterung der Möglichkeiten und die vereinfachte Bewältigung der neuen Anforderungen, die von aktuellen Lichtsystemen, insbesondere Matrix- Lichtsystemen, zunehmend verlangt werden.

Erstmalig kann gezielt eine stark anisotrope Streuung durch neuartige Freiformstrukturen auf beliebigen optischen Flächen maßgeschneidert erzeugt werden. Dabei ist insbesondere der Intensitätsverlauf gezielt steuerbar. Als Folge ist die erzeugte Streuung in der Lage, mehrere Eigenschaften des Lichtes gleichzeitig zu verbessern. Dabei wird besonders an diese Eigenschaften gedacht:
- eine Homogenisierung (d.h. ein unsichtbar machen) von Segmentübergangen bei einem Matrix-Lichtmodul,
- ein nahtloses Überblenden zwischen mehreren Teillichtverteilungen eines Matrix-Lichtmoduls, horizontal und vertikal, jeweils unabhängig voneinander,
- Zusätzliche Vergrößerung der Ausdehnung der Lichtverteilung

Die Toleranz bei der Einstellung von Teilen einer Gesamtlichtverteilung wird erhöht, d.h. mehrere Teillichtverteilungen sind zueinander leichter zu justieren, was Vorteile in der Fertigung bringt. Dies ist möglich, weil die Streuung an den Übergängen der Teillichtverteilungen maßgeschneidert werden kann. Man kann in diesem Zuge von einer gezielten Lichtformung sprechen.

Diese starke Erweiterung der Funktionalität führt zu einer Erhöhung der Komplexität der Oberflächenelementmodelle. Diese wird beherrschbar gemacht durch die Anwendung eines Verfahrens, welches die kompletten Anforderungen, von der Auslegung bis zur Herstellbarkeit, abdeckt.

Der Entwurf, die lichttechnische Analyse und die Erzeugung der durch die Oberflächenelementmodelle verwirklichten Oberflächenmodulationen und der damit verbundenen Daten wird in allen Schritten einfach, transparent und robust gestaltet. Das ermöglicht die Vermeidung von Fehlern, da alle Daten aus der gleichen Berechnung hervorgehen.

Durch die erhöhte Funktionalität der neuen Freiformstrukturen können optische Bauteile vereinfacht werden oder entfallen. So werden erhebliche Kosten eingespart, die Komplexität des Gesamtsystems sinkt, und die Robustheit wird erhöht.

Gesetzlich vorgeschriebene Lichtwerte (bspw. Overheadwerte) sind mit den als Oberflächenmodelle entworfenen und als Freiformstrukturen verwirklichten Modulationen der optischen Fläche leicht realisierbar. Es werden unter Serienfertigungsbedingungen stabile Lichtwerte erzielt. Dies ist einfacher und reproduzierbarer als aufwändigere und weniger verlässliche Lösungen, wie etwa Zusatzoptiken, die zu Primaroptiken bisher hinzugefügt wurden. Die Erfindung führt in diesem Zusammenhang zu einfacheren und stabileren Produktionsbedingungen.

Durch das erfindungsgemäße Verfahren kann gewährleistet werden, dass bereits während der Auslegung der Freiformstrukturen fertigungstechnische Aspekte berücksichtigt werden. Dadurch ist die Herstellbarkeit der Strukturen bereits im Vorfeld abgesichert.

Eine bevorzugte Ausgestaltung zeichnet sich dadurch aus, dass bei der Vorgabe der Oberflächenelementmodelle eine spätere Herstellbarkeit dadurch gesichert wird, dass bei der Vorgabe minimale Flächenkrümmungsradien vorgegeben werden, die bei einer späteren Herstellung des optischen Elements durch Werkzeuge vorgegeben und eingehalten werden können.

Bevorzugt ist auch, dass ein Vergleich zwischen der definierten Soll-Lichtverteilung und der simulierten Ist-Lichtverteilung erfolgt und dass dann, wenn sich Lichtwerte der Soll-Lichtverteilung und der simulierten Ist-Lichtverteilung um mehr als ein vorbestimmtes Ausmaß unterscheiden, die Oberflächenelementmodelle so verändert werden, dass sich Unterschiede zwischen der definierten Soll-Lichtverteilung und einer dann erneut durch Simulation berechneten Ist-Lichtteilung verringern, und dass diese Schleife aus Simulation, Veränderung und Vergleich wiederholt wird, bis sich eine simulierte Ist-Lichtverteilung ergibt, die ausreichend genau mit der Soll-Lichtverteilung übereinstimmt.

Weiter ist bevorzugt, dass jedes Oberflächenelementmodell eine bei einer bestimmungsgemäßen Verwendung als Kraftfahrzeugscheinwerfer vertikale Streucharakteristik und eine horizontale Streucharakteristik besitzt.

Eine weitere bevorzugte Ausgestaltung zeichnet sich dadurch aus, dass die Streucharakteristiken durch die Form von Begrenzungskurven der Oberflächenelementmodelle festgelegt werden.

Bevorzugt ist auch, dass die Oberflächenelementmodelle durch für bzgl. der Hauptabstrahlrichtung des Scheinwerfers horizontale und vertikale Streurichtungen unterschiedliche Begrenzungskurven begrenzt werden.

Weiter ist bevorzugt, dass als Begrenzungskurven NURBS- oder andere Spline- oder Bézierkurven verwendet werden. Eine weitere bevorzugte Ausgestaltung zeichnet sich dadurch aus, dass durch Kombination der Begrenzungskurven für die horizontale und für die vertikale Streurichtung eine Fläche entsteht, die ein einzelnes Oberflächenmodellelement für eine Modulation der optischen Oberfläche darstellt.

Bevorzugt ist auch, dass das Oberflächenelementmodell eine Modulation eines Teils der optischen Fläche bildet, indem es lokal eine Vertiefung und/oder eine Erhöhung dieses Teils der optischen Fläche bildet.

Weiter ist bevorzugt, dass Oberflächenelementmodelle durch Aneinanderreihung in horizontaler und vertikaler Richtung zu einer Gesamtfläche kombiniert werden. Diese Gesamtfläche wird in die lichttechnische Simulation übernommen und in weiteren Schritten optimiert.

Eine weitere bevorzugte Ausgestaltung zeichnet sich dadurch aus, dass die Oberflächenelementmodelle sich dabei nahtlos und bevorzugt mit stetig differenzierbarem Übergang (mindestens C1 stetig, also mindestens einmal stetig differenzierbar)aneinander anschließen.

Bevorzugt ist auch, dass gleichzeitig unterschiedliche Typen von Oberflächenelementmodellen auf derselben optischen Fläche verwendet werden.

Weiter ist bevorzugt, dass unterschiedliche Oberflächenelementmodelle auf einer optischen Fläche verwendet werden, wobei sie frei positioniert und in frei wählbarer Reihenfolge angeordnet sein können.

Eine weitere bevorzugte Ausgestaltung zeichnet sich dadurch aus, dass die unterschiedlichen Typen mindestens C1-stetig differenzierbar ineinander übergehen.

Bevorzugt ist auch, dass eine laterale Ausdehnung der Oberflächenelementmodelle im Bereich von 0,1mm bis zu 5mm liegt, insbesondere von 0,5mm bis 1 mm, und dass die Höhe der Oberflächenelementmodelle von unter einem Mikrometer bis zu einigen hundert Mikrometern, insbesondere von 3 Mikrometern bis 25 Mikrometer reicht.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Bei der Beschreibung einzelner Figuren wird ggf. auch auf Elemente aus anderen Figuren Bezug genommen. Es zeigen, jeweils in schematischer Form:
Figur 1 einen Kraftfahrzeugscheinwerfer als technisches Umfeld der Erfindung;
Figur 2 ein Ausführungsbeispiel einer Lichtquelle;
Figur 3 eine Matrix-Lichtverteilung, bei der einige Segmente aktiv bzw. inaktiv sind;
Figur 4 ein Flussdiagramm als Ausführungsbeispiel eines erfindungsgemäßen Verfahrens;
Figur 5 eine Zerlegung einer als CAD-Modell vorliegenden optischen Fläche in Teilaperturen und Lichtverteilungsbeiträge der Teilaperturen;
Figur 6 ein Beispiel für eine Begrenzungskurve, die als Berechnungsgrundlage für ein Oberflächenelementmodell dient;
Figur 7 nebeneinander zwei Begrenzungskurven für unterschiedliche Raumrichtungen;
Figur 8 eine Kombination der Begrenzungskurven aus Figur 7 zu einem im Raum gewölbten Oberflächenelementmodell;
Figur 9 ein Beispiel dafür, wie aus Oberflächenelementmodellen ein Ensemble in Form einer Gesamtfläche erzeugt wird;
Figur 10 einen Ausschnitt aus einer optischen Oberfläche, die in verschiedene Bereiche unterteilt ist;
Figur 11 einen Intensitätsverlauf einer Soll-Lichtverteilung, die auf der in Figur 3 dargestellten Lichtverteilung basiert;
Figur 12 ausschnittsweise ein Beispiel einer Soll-Lichtverteilung, die ebenfalls auf der in Figur 3 dargestellten Lichtverteilung basiert; und
Figur 13 eine Intensitätsverteilung eines Kraftfahrzeugscheinwerfers mit zweizeiliger Lichtquelle mit Abblendlichtanteil.

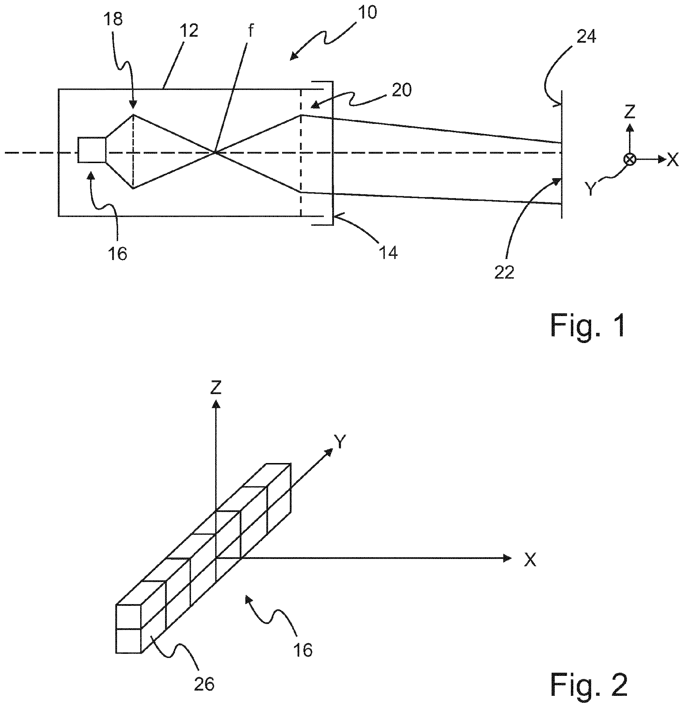

Figur 1 zeigt im Einzelnen einen Kraftfahrzeugscheinwerfer als technisches Umfeld der Erfindung. Der Kraftfahrzeugscheinwerfer 10 weist ein Gehäuse 12 auf, dessen Lichtaustrittsöffnung von einer transparenten Abdeckscheibe 14 abgedeckt wird. Im Gehäuse 12 ist eine Lichtquelle 16 angeordnet, die zum Beispiel eine Mehrzahl einzeln schaltbarer Leuchtdioden aufweist, die in wenigstens einer Zeile oder in wenigstens einer Zeile und einer Spalte angeordnet sind. Eine Lichtaustrittsfläche der Lichtquelle wird im dargestellten Ausführungsbeispiel von einer Primäroptik 18 als innere Lichtverteilung in einen Fokalbereich f einer Sekundäroptik 20 projiziert. In anderen Ausgestaltungen könnte sich die Primäroptik 18 selbst im Fokus der Sekundäroptik 20 befinden, was auch als direktabbildendes System bekannt ist. Die Sekundäroptik 20 bildet die innere Lichtverteilung als äußere Lichtverteilung 22 zum Beispiel auf einen im Vorfeld des Kraftfahrzeugscheinwerfers 10 angeordneten Testschirm 24 ab. Die x-Richtung entspricht der Hauptabstrahlrichtung des Kraftfahrzeugscheinwerfers 10. Die y- Richtung liegt bei bestimmungsgemäßer Verwendung des Kraftfahrzeugscheinwerfers 10 parallel zum Horizont, und die z-Richtung entspricht dann einer Vertikalen.

Figur 2 zeigt ein Ausführungsbeispiel einer Lichtquelle 16. Die Lichtquelle weist horizontal (y-Richtung) und damit in Zeilen nebeneinander liegende Leuchtdioden 26 und vertikal (z-Richtung) und damit in Spalten übereinander angeordnete Leuchtdioden 26 auf, die ihr Licht in x-Richtung abstrahlen. Die Leuchtdioden 26 sind einzeln und/oder gruppenweise schaltbar, so dass sich je nach Schaltzustand verschiedene innere und damit auch äußere Lichtverteilungen erzeugen lassen. Die Lichtverteilungen/Bilder der einzelnen Leuchtdioden liegen in y-Richtung und/oder in z-Richtung nebeneinander, wobei sich ihre Ränder überlappen können.

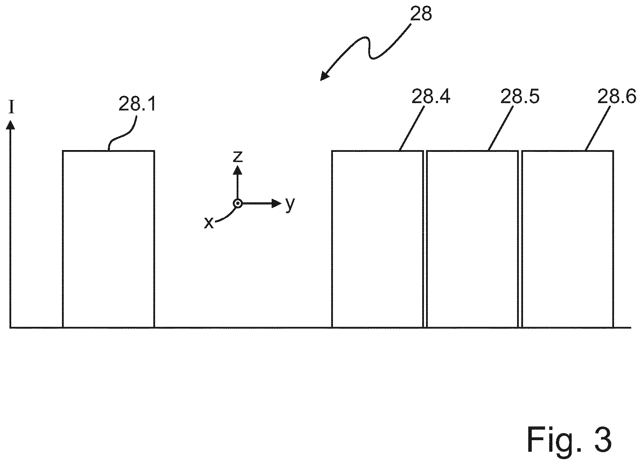

Figur 3 zeigt eine Matrix-Lichtverteilung, bei der einige Segmente aktiv bzw. inaktiv sind. Die Abszisse liegt parallel zur y-Richtung. Die Ordinate gibt die Intensität I (Helligkeit) der Lichtverteilung an. Jedes Segment ist ein mehr oder weniger scharfes Bild einer Lichtaustrittsfläche einer Leuchtdiode 26 einer Lichtquelle 16, die eine Zeile mit sechs Leuchtdioden 26 aufweist. Links ist ein Segment 28.1 eingeschaltet, dann folgen zwei ausgeschaltete Segmente und zum Schluss, auf der rechten Seite, drei wiederum aktivierte Segmente 28.4, 28.5, 28.6. Die Lichtverteilung 28 ergibt sich ohne die Wirkung der als Freiformstrukturen realisierten und als Oberflächenelementmodelle entworfenen Modulationen der optischen Fläche. Die Ränder der Segmente sind in diesem Fall nach allen Seiten scharf begrenzt. Die Übergänge zwischen den drei nebeneinander liegenden, aktivierten Segmenten sind klar zu erkennen, was eine unerwünschte Inhomogenität darstellt. Die Übergänge der drei benachbarten Segmente sollen idealerweise unsichtbar sein, sodass nur ein homogenes Lichtband wahrgenommen wird.

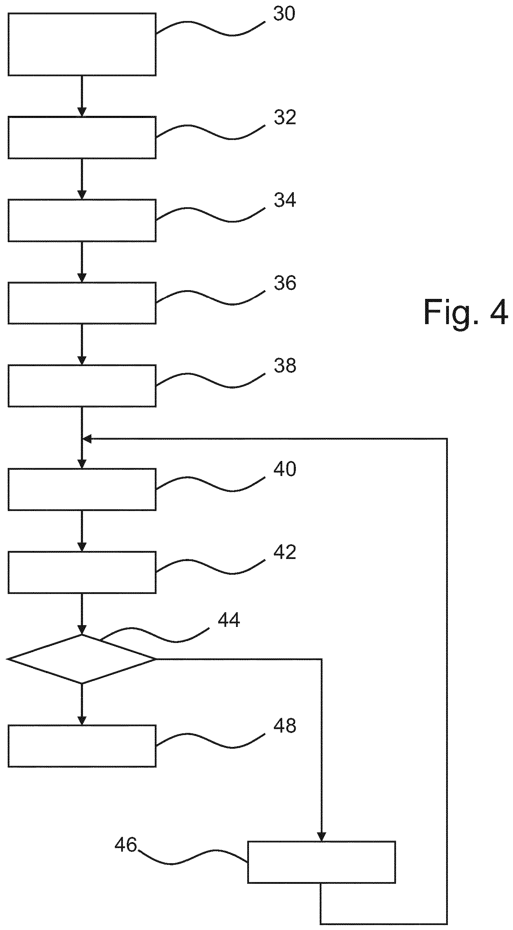

Figur 4 zeigt ein Flussdiagramm als Ausführungsbeispiel eines erfindungsgemäßen Verfahrens zur Konstruktion eines optischen Elements für einen Kraftfahrzeugscheinwerfer, welches optische Element eine optische Fläche aufweist, die von wenigstens einer Lichtquelle des Kraftfahrzeugscheinwerfers beleuchtbar ist und die das Licht der wenigstens einen Lichtquelle in eine Ist-Lichtverteilung verteilt.

Das Verfahren wird zum Beispiel von einem Rechner ausgeführt, der einen Mikroprozessor und einen Speicher aufweist, in dem den Verfahrensschritten entsprechende Anweisungen in maschinenlesbarer Form zur Abarbeitung durch den Mikroprozessor gespeichert sind.

Zunächst wird in einem nicht zum Verfahren zugehörigen Schritt 30 eine Soll-Lichtverteilung definiert. Die Soll-Lichtverteilung zeichnet sich zum Beispiel dadurch aus, dass sie in bestimmten Abstrahlwinkelrichtungen und Entfernungen vorbestimmte Helligkeitswerte besitzt und innerhalb heller Bereiche ein homogenes Erscheinungsbild ohne z.B. hellere oder dunkle Linien zwischen einzelnen hellen Bereichen aufweist. Entsprechende Daten werden dem Rechner übergeben.

In einem ersten Schritt 32 erstellt das erfindungsgemäße Verfahren ein CAD-Modell der optischen Fläche. Das optische Element ist zum Beispiel eine Projektionslinse einer Sekundäroptik. Die optische Fläche kann dann zum Beispiel eine Lichtaustrittsfläche der Projektionslinse sein. Die optische Fläche kann auch eine Lichteintrittsfläche der Projektionslinse oder eine Lichteintrittsfläche oder Lichtaustrittsfläche einer lichtbrechenden Primäroptik oder einer transparenten Abdeckscheibe sein. Außerdem kann die optische Fläche auch eine reflektierende Fläche eines Reflektors sein. Der Reflektor kann ein aus der Luft einfallendes Licht reflektierender Reflektor oder ein intern total reflektierender Reflektor sein.

In einem zweiten Schritt 34 wird das CAD-Modell der optischen Fläche in Teilaperturflächen zerlegt.

In einem dritten Schritt 36 wird für alle Teilaperturflächen eine Teillichtverteilung berechnet, die von jeweils einer Teilaperturfläche in verschiedenen Bereichen der Lichtverteilung erzeugt wird. Auf diese Weise wird das von der optischen Fläche ausgehende Licht der Lichtquelle analysiert.

In einem vierten Schritt 38 werden Oberflächenelementmodelle der optischen Fläche vorgegeben, welche Oberflächenelementmodelle eine durch ihre Form bedingte Streucharakteristik in einer ersten Raumrichtung und in einer von der ersten Raumrichtung verschiedenen zweiten Raumrichtung besitzen. In diesen Raumrichtungen kann die Streucharakteristik jeweils asymmetrisch sein, so dass zum Beispiel in einer bezogen auf die Einbaulage im Scheinwerfer horizontalen Raumrichtung (hier: y-Richtung) nach rechts anders gestreut wird als nach links und dass in einer vertikalen Raumrichtung (hier: z-Richtung) nach oben anders gestreut wird als nach unten.

Bei der Vorgabe der Oberflächenelementmodelle wird bevorzugt bereits die spätere Herstellbarkeit vorab gesichert, in dem bei der Vorgabe nur praktikable Radien von für eine spätere Herstellung erforderlichen Werkzeugen wie Fräsern oder Drehmeißeln sowie auch die Höhe der Oberflächenelementmodelle berücksichtigt werden.

In einem fünften Schritt 40 wird eine Mehrzahl von Oberflächenelementmodellen zu einem wenigstens einen zusammenhängenden Teil der optischen Fläche bedeckenden Ensemble zusammengefügt. Als Ergebnis dieses Schrittes 40 ergibt sich eine mathematische Definition der Gesamtfläche der optischen Fläche durch additive Überlagerung mit der ursprünglichen Ausgangsform der optischen Fläche. In einem sechsten Schritt 42 erfolgt eine Simulation einer Ist-Lichtverteilung, die von der mathematisch definierten optischen Fläche und damit unter Einfluss des Ensembles ausgeht. Sofern erforderlich, wird die simulierte Ist-Lichtverteilung vom Rechner als Reaktion auf eine Variation der die Streucharakteristik definierenden Formen der Oberflächenelementmodelle des Ensembles verändert. Eine solche Veränderung erlaubt eine iterative Optimierung der Streucharakteristik. Die Veränderung kann innerhalb des Verfahrens automatisch erfolgen. So kann zum Beispiel in einem siebten Schritt 44 ein Vergleich zwischen der vorbestimmten Soll-Lichtverteilung und der simulierten Ist-Lichtverteilung erfolgen. Wenn sich die Lichtwerte (z.B. Intensitäten der Lichtverteilung an vorbestimmten Raumpunkten) der Soll-Lichtverteilung und der simulierten Ist-Lichtverteilung um mehr als ein vorbestimmtes Ausmaß unterscheiden, verzweigt das Programm in einen achten Schritt 46, in dem die Oberflächenelementmodelle so verändert werden, dass sich Unterschiede zwischen der vorbestimmten Soll-Lichtverteilung und der dann wiederholt durch Simulation berechneten Ist-Lichtteilung verringern. Eine solche Veränderung kann bevorzugt auch durch Eingriffe des Konstrukteurs erfolgen, um die Streucharakteristika iterativ zu optimieren.

Vom achten Schritt 46 aus verzweigt das Verfahren dann zurück in den Schritt 40, in dem die veränderten Oberflächenelementmodelle erneut zu einem Ensemble zusammengefügt werden. Die Schleife aus der Schritten 40, 42, 44, und 46 wird ggf. mehrfach durchlaufen, bis sich durch iterative Veränderung eine simulierte Ist-Lichtverteilung ergibt, die ausreichend genau mit der Soll-Lichtverteilung übereinstimmt. In diesem Fall verzweigt das Verfahren aus dem Schritt 44 heraus in einen neunten Schritt 48, in dem Daten der Oberflächenelementmodelle der Ausgangsform überlagert zur Übergabe an eine Werkzeugherstellung bereitgestellt werden, mit der optische Elemente hergestellt werden können, die eine optische Fläche aufweisen, die mit den berechneten Oberflächenelementmodellen moduliert ist.

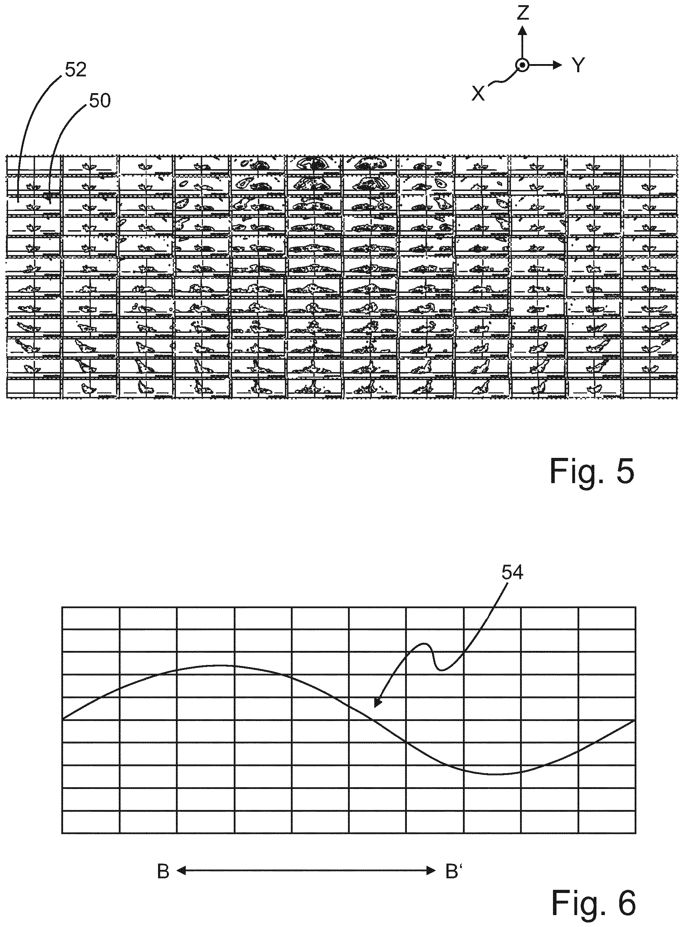

Figur 5 veranschaulicht zunächst ein mögliches Ergebnis des zweiten Schritts 34 (Zerlegung in Teilaperturflächen) und des dritten Schritts 36 (Berechnen von Teillichtverteilungen) für eine Lichtaustrittsfläche einer Sekundäroptik-Projektionslinse.

Die Teilaperturflächen 50 sind in diesem Beispiel Rechtecke. Jedem Rechteck ist ein Bereich der optischen Fläche der Linse oder des Reflektors zugeordnet. Jedem Punkt der Rechtecke ist wiederum ein Abstrahlwinkel zugeordnet. Der zentrale Punkt jedes Rechtecks liegt, wenn man die Figur 1 hinzuzieht, auf der x-Richtung und entspricht damit einer zentralen Abstrahlrichtung (Winkel zwischen Strahl und x-Richtung gleich Null). Die anderen Punkte der Teilaperturen repräsentieren andere Abstrahlrichtungen. Diese anderen Abstrahlrichtungen decken in horizontaler Richtung (Breitseite der Rechtecke, y-Richtung)) die horizontale Breite (Streubreite) der Lichtverteilung ab, und sie decken entsprechend in der vertikalen Richtung (Schmalseite der Rechtecke, z-Richtung) die vertikale Breite und damit die Höhe der Lichtverteilung ab.

Ein abseits des zentralen Punkts einer Teilapertur liegender Punkt repräsentiert insbesondere ein Abstrahlwinkelpaar aus einem Winkel, den die zugehörige Abstrahlrichtung mit der x-Richtung in einer horizontalen Ebene einschließt, und einem Winkel, den diese Abstrahlrichtung mit der x-Richtung in einer vertikalen Ebene einschließt. Die unregelmäßig geformten Bereiche, die innerhalb der Rechtecke liegen, geben damit jeweils die Richtungen an, in denen die zugehörige Teilapertur Licht der Lichtquelle abstrahlt. Sie stellen damit Teillichtverteilungen 52 dar.

Die Figur 5 gibt damit unmittelbar an, von welchen Orten der optischen Fläche wieviel Licht in welche Bereiche der Lichtverteilung ausgeht.

Aus der Figur 5 lässt sich durch Vergleich mit der Soll-Lichtverteilung ableiten, welche Streucharakteristik für welchen Ort der optischen Fläche benötigt wird.

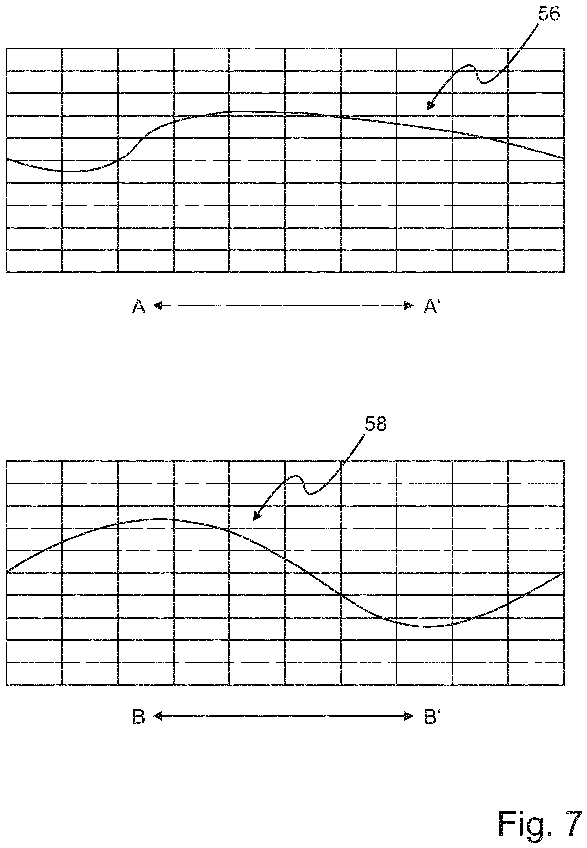

Im Folgenden wird eine Erzeugung der Oberflächenelementmodelle beschrieben, wie sie im vierten Schritt 38 des Flussdiagramms aus der Figur 7 erfolgt.

Den Oberflächenelementmodellen liegt eine mathematische Beschreibung zu Grunde. Diese ist nicht fest an bestimmte Berechnungsformeln geknüpft, sondern kann je nach Bedarf variiert werden. Dabei ist auch die Verwendung unterschiedlicher mathematischer Beschreibungen (Begrenzungskurven) für horizontale bzw. vertikale Streurichtungen vorgesehen. Diese sind komplett voneinander unabhängig. Als mathematische Beschreibung werden beispielsweise NURBS, andere Spline- oder Bézierkurven verwendet.

Prinzipiell können auch jederzeit andere mathematische Beschreibungen eingesetzt werden. Spline-Funktionen haben den großen Vorteil dass sie für eine rechnergestützte Echtzeitanalyse besonders geeignet sind.

Jedes Oberflächenelementmodell besitzt als eine Grundfläche einen Teil der optischen Fläche, auf dem es angeordnet wird.

Das Oberflächenelementmodell bildet eine Modulation dieses Teils der optischen Fläche, indem es lokal eine Vertiefung und/oder eine Erhöhung dieses Teils der optischen Fläche bildet. Das Oberflächenmodell besitzt eine im Allgemeinen im Raum gewölbte Oberfläche, an der Licht der Lichtquelle gestreut wird und die durch Begrenzungskurven begrenzt wird. Jedes Oberflächenelementmodell besitzt eine vertikale Streucharakteristik und eine horizontale Streucharakteristik. Die Streucharakteristiken werden durch die Form der Begrenzungskurven der Oberflächenelementmodelle festgelegt.

Figur 6 zeigt ein Beispiel für eine Begrenzungskurve 54, die in einer Richtung (z.B. vertikal, z)als Berechnungsgrundlage für ein Oberflächenelementmodell dient. In vertikaler Richtung erzeugt ein Abschnitt der Begrenzungskurve eine Streucharakteristik B, welche Lichtanteile nach unten streut. Zugleich generiert ein anderer Abschnitt eine Streucharakteristik B', die Lichtanteile nach oben streut. Dabei wird B ungleich B' gewählt, wenn dies Vorteile bringt. B und B' haben also einen unterschiedlichen, durch die Form der Abschnitte präzise steuerbaren Intensitätsverlauf. Die Achsen haben jeweils die physikalische Dimension einer Länge. Die Abszisse liegt parallel zur z-Richtung und die Ordinate entspricht der x-Richtung.

Figur 7 zeigt nebeneinander zwei Begrenzungskurven 56, 58. Die im linken Teil der Figur 7 dargestellte Begrenzungskurve 56 erzeugt eine vertikale Streuung, also z.B. eine Streuung A nach oben und eine Streuung A' nach unten. Die im rechten Teil der Figur 7 dargestellte Begrenzungskurve 58 erzeugt eine horizontale Streuung, also z.B. eine Streuung B nach rechts und eine Streuung B' nach links. Auch für die horizontale Streuung gilt, dass B im Allgemeinen ungleich B' ist. B und B' sind wiederum verschieden von A und A'. Dies ist ebenfalls exemplarisch in Figur 7 dargestellt. Die Bezeichnungen A, A', B, B' dienen hier nur der verbalen Unterscheidung und haben keine darüber hinaus keine die Streuwirkung charakterisierende Bedeutung. Im Verhältnis zur Wellenlänge sind die Amplituden überhöht dargestellt.

Durch geeignete Kombination (Addition, Multiplikation oder andere mathematische Operationen) der Kurven 56, 58 für die horizontale und für die vertikale Streurichtung entsteht eine Fläche, die ein einzelnes Oberflächenmodellelement für eine Modulation der optischen Oberfläche darstellt.

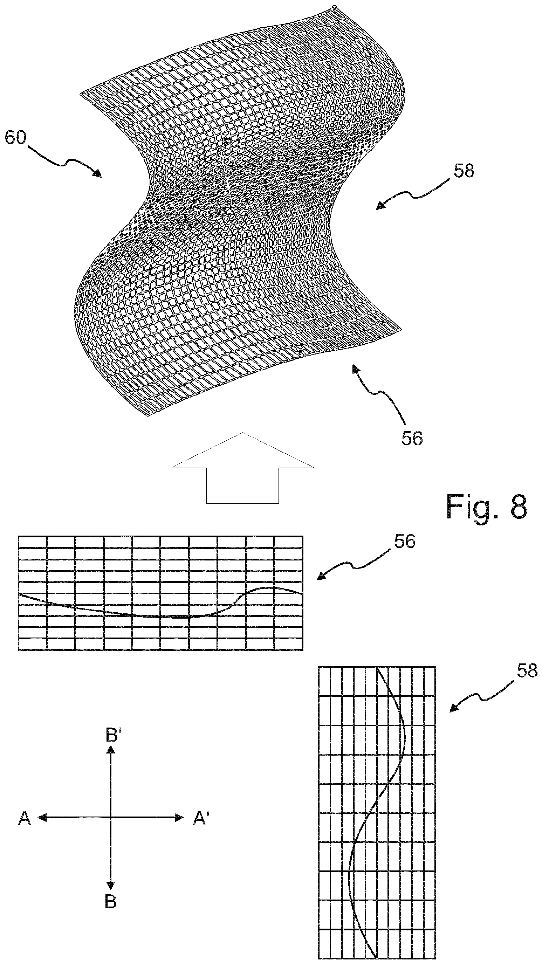

Figur 8 zeigt eine Kombination von horizontaler Kurve 58 und vertikaler Kurve 56 aus der Figur 7, die ein im Raum gewölbtes Oberflächenelementmodell 60 bildet.

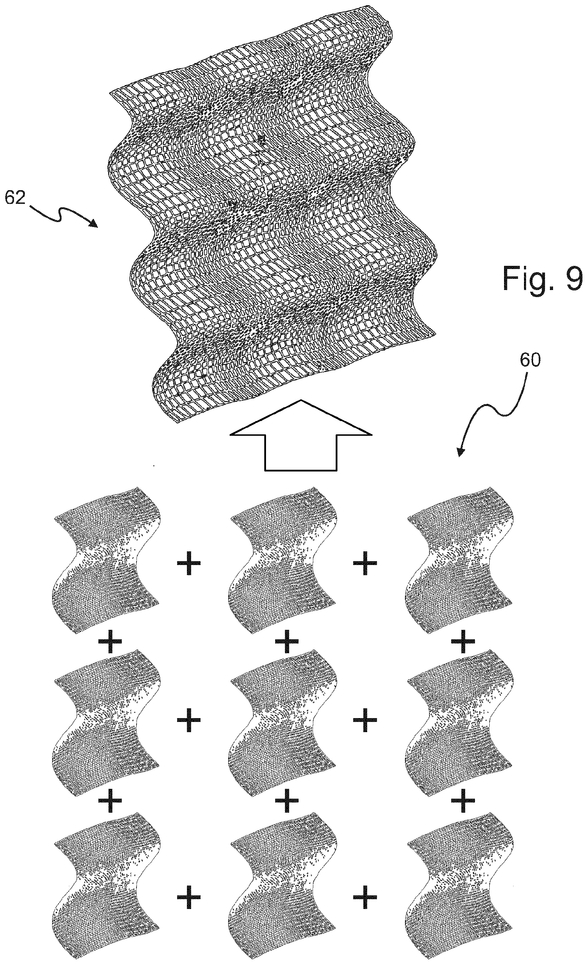

Figur 9 zeigt ein Beispiel dafür, wie aus einer Mehrzahl solcher Oberflächenelementmodelle 60 ein Ensemble in Form eine Gesamtfläche 62 erzeugt wird. Dazu werden Oberflächenelementmodelle 60 durch Aneinanderreihung in horizontaler und vertikaler Richtung zu der Gesamtfläche 62 periodisch kombiniert. Die Oberflächenelementmodelle 60 schließen sich dabei nahtlos und bevorzugt mit stetig differenzierbarem Übergang (also ohne Knick oder Stufe) aneinander an. Diese C1-Stetigkeit erleichtert eine Herstellbarkeit von Werkzeugen und Teilen. Auch C2- oder C0- stetige Übergänge sind möglich. Die Oberflächenelementmodelle 60 sind vorzugsweise in einem kartesischen Gitter angeordnet, das aus quadratischen Elementen gebildet wird. Auch andere Anordnungen sind denkbar: z.B. kreisförmig, hexagonal, rautenförmig, rechteckig, elliptisch, verzahnt etc.

Bei Bedarf können gleichzeitig unterschiedliche Typen von Oberflächenelementmodellen 60 auf derselben optischen Fläche verwendet werden. Dabei können unterschiedliche Oberflächenelementmodelle 60 auf einer optischen Fläche verwendet werden, wobei sie frei positioniert und in frei wählbarer Reihenfolge angeordnet sein können. In einer Ausgestaltung wird die gesamte optische Fläche mit Oberflächenelementmodellen 60 belegt. In einer alternativen Ausgestaltung wird nur ein (zusammenhängender) Teil oder mehrere nicht miteinander zusammenhängende Teile der optischen Fläche mit Oberflächenelementmodellen 60 belegt.

Werden unterschiedliche Typen von Oberflächenelementmodellen 60 verwendet, so kann dort, wo die unterschiedlichen Typen aneinander angrenzen, ein Übergangsbereich definiert werden, mit dem ein weicher, stets C1-stetiger Übergang zwischen den Oberflächenelementmodellen 60 unterschiedlichen Typs erreicht wird.

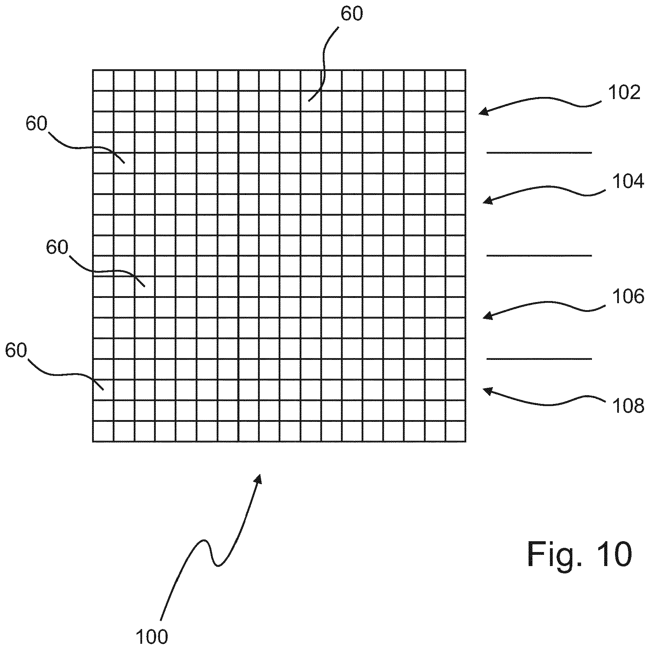

Figur 10 zeigt eine optische Fläche 100, die in n = vier verschiedene Bereiche 102, 104, 106, 108 unterteilt ist. Die Zahl n ist willkürlich gewählt und kann auch andere Werte besitzen. Innerhalb von jedem der vier Bereiche können Oberflächenelementmodelle 60 identisch sein, wobei sie sich aber gleichzeitig von Bereich zu Bereich unterscheiden. Die Oberflächenelementmodelle 60 sind kartesisch angeordnet. Weiterhin können nur Teile einer optischen Fläche 100 oder die gesamte Fläche 100 mit aus den Oberflächenelementmodellen als Freiformstrukturen erzeugten Oberflächenmodulationen belegt sein.

Losgelöst von diesen Beispielen gilt allgemein, dass die laterale, also horizontale und vertikale Ausdehnung der Oberflächenelementmodelle bevorzugt im Bereich von zirka 0,1mm bis zu zirka 5mm liegt. Die Höhe der Oberflächenelementmodelle reicht von deutlich unter einem Mikrometer bis zu einigen hundert Mikrometern. Häufige und typische Werte sind für die laterale Ausdehnung 0,5mm bis 1 mm und für die Höhe 3 bis 25 Mikrometer.

Die Oberflächenelementmodelle werden beim Entwurf des optischen Elements dadurch auf die optische Fläche aufgebracht, dass die errechnete, lokale Höhe der Oberflächenelementmodelle punktweise zu der jeweils zugehörigen Koordinate der optischen Fläche addiert wird.

Die Zahl der auf einer optischen Fläche 100 angeordneten Oberflächenelemente 60 liegt im Bereich von einigen zehn bis zu einigen zehntausend. Auch mehr als hunderttausend Oberflächenelemente sind möglich, wenn die einzelnen Oberflächenelemente entsprechend klein sind, bzw. die optische Fläche verhältnismäßig groß ist.

Üblicherweise wird die optische Fläche, auf welche die Oberflächenmodelle aufgebracht werden, vollständig mit diesen besetzt. Dadurch kommen typischerweise einige hundert bis einige zehntausend Oberflächenmodelle zum Einsatz. Durch diese Vielzahl wird die Robustheit der Lichtstreuung wesentlich verbessert. Besonders Abweichungen im mikroskopischen Bereich (Oberflächenqualität) werden dadurch gemittelt und stören deshalb die Streucharakteristik nicht. Sogar der Komplettausfall einiger Oberflächenelemente macht sich nicht bemerkbar, da dies durch die vielen weiteren Oberflächenelemente kompensiert wird. Die Toleranzanfälligkeit des optischen Systems wird dadurch insgesamt drastisch reduziert.

Bei einem Scheinwerfer mit Primäroptik und Sekundäroptik, bei dem eine optische Fläche der Sekundäroptik mit den Oberflächenmodellen belegt ist, kann die vorgelagerte Primaroptik jetzt einfacher entworfen und hergestellt werden, da sich deren Geometrie deutlich vereinfacht.

Im Folgenden wird die mit den vorgeschlagenen Modulationen der optischen Fläche erzielbare Wirkung auf eine einfache Matrix-Lichtverteilung exemplarisch dargestellt.

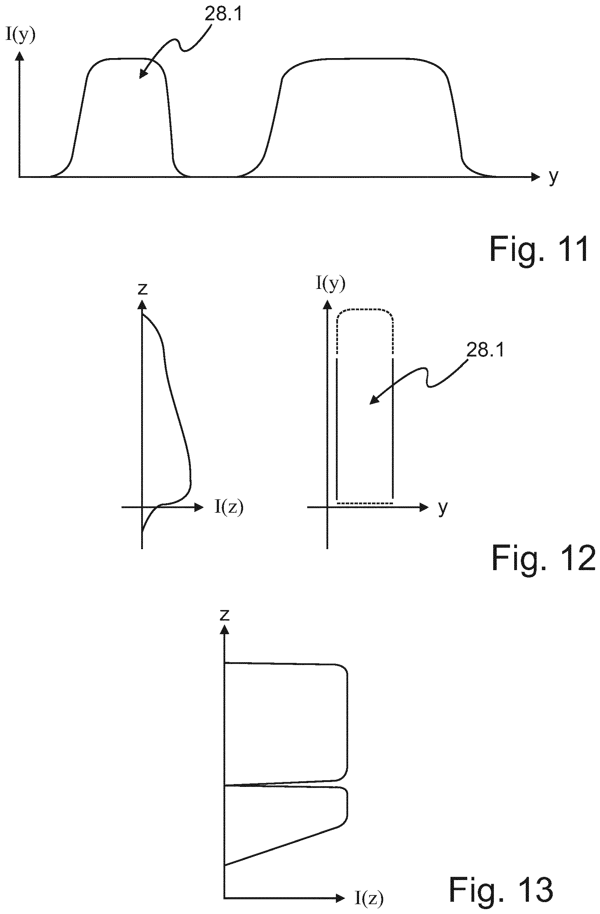

Figur 11 zeigt ein Beispiel eines Intensitätsverlaufs einer Soll-Lichtverteilung, die auf der in Figur 3 dargestellten Lichtverteilung basiert. Die Soll-Lichtverteilung 28.1 der Figur 11 entsteht dadurch, dass die optische Fläche, mit der die in der Figur 3 dargestellte Lichtverteilung erzeugt wird, durch in geeigneter Weise horizontal streuende Oberflächenelementmodelle moduliert wird. Durch eine aus dieser Modulation resultierende, rein horizontal und mit einer geeigneten Charakteristik wirkenden Streuung werden die Segmente der Lichtverteilung horizontal verbreitert. Gleichzeitig entsteht aus den scharfen, senkrechten Kanten der Segmente ein sanfter und gleichmäßiger Auslauf der Helligkeit in horizontaler Richtung. Die Übergänge zwischen den drei rechts liegenden Segmenten sind nicht mehr zu erkennen. Benachbarte Segmente verschmelzen, die resultierende Lichtverteilung ist nun etwas breiter, aber beim Übergang zwischen den Segmenten vollständig homogen.

An die vertikale Streuung, die auf die obere und untere Kante der Segmente wirkt, werden ganz andere Anforderungen gestellt. Einerseits wird nach unten ein harmonischer, möglichst unsichtbarer Übergang der Segmente in einen unterhalb liegenden Teil einer Abblendlichtverteilung verlangt. Es muss also eine Streucharakteristik erzielt werden, die dem Hell-Dunkel-Übergang eines Abblendlichtes ähnlich ist, nur in umgekehrter Richtung. Andererseits wird oft eine Vergrößerung der Segmenthöhe durch eine zusätzliche, wesentlich stärkere Streuung verlangt. Auch hier ist an der neu entstehenden Oberkante ein entsprechend weicher Auslauf der Segmente gewünscht.

In vertikaler Streurichtung müssen durch die vorgeschlagenen Oberflächenelementmodelle also zwei Aufgaben gleichzeitig gelöst werden. Die vorgeschlagenen Strukturen können durch ihre hohe Flexibilität diese Anforderungen erfüllen und führen zu der in Figur 12 gezeigten Lichtverteilung.

Figur 12 zeigt ausschnittsweise ein Beispiel einer Soll-Lichtverteilung, die ebenfalls auf der in Figur 3 dargestellten Lichtverteilung basiert. Die Soll-Lichtverteilung der Figur 12 entsteht dadurch, dass die optische Fläche, mit der die in der Figur 3 dargestellte Lichtverteilung erzeugt wird, durch in geeigneter Weise vertikal streuende Oberflächenelementmodelle moduliert wird. Hier sind Oberflächenelementmodelle mit rein vertikaler Wirkung zur die Lichtverteilung aus Figur 3 erzeugenden optischen Fläche hinzugefügt worden. Die vertikale Streuung ist asymmetrisch und damit anisotrop. Dadurch wird einerseits ein weicher Übergang zum Abblendlicht nach unten und andererseits eine Vergrößerung der Segmenthöhe nach oben erreicht (das Segment 28.1 in Figur 12 ist höher als das Segment 28.1 in Figur 11). Links neben dem Segment 28.1 in Figur 12 ist der Intensitätsverlauf längs der Richtung der Höhe des Segments 28.1 in z-Richtung aufgetragen. Der allmähliche Anstieg und Abfall der Intensität in der z-Richtung (linker Teil der Figur 12) spiegelt sich im unterbrochen dargestellten Auslauf der Intensität I(y) im rechten Teil der Figur 12 wider.

Kombiniert man nun die horizontale Streucharakteristik (z.B. Figur 3) mit der vertikalen Streucharakteristik (z.B. Figur 11), so ergibt sich eine Lichtverteilung, die sowohl in horizontaler Richtung als auch in vertikaler Richtung alle gezeigten Eigenschaften zugleich aufweist. Man erhält also eine homogene Lichtverteilung ohne sichtbare Segmentgrenzen, die eine vergrößerte Segmenthöhe bei gleichzeitig harmonischem Auslauf der Lichtverteilung nach oben und unten aufweist.

Für Matrix-Systeme mit mehreren übereinander angeordneten Segment-Zeilen lassen sich die vorgeschlagenen Freiformstrukturen ebenso einsetzen. Hier wird eine geringe Streuung nach oben verlangt, um ein Übersprechen weiter unten befindlicher Segmente in darüber liegende, ausgeschaltete Segmente zu verhindern. Gleichzeitig wird aber eine stärkere Streuung nach unten benötigt, um den Übergang zu weiteren Abblendlichtkomponenten weich zu gestalten. Außerdem wird ein homogener Übergang zwischen den Segment-Zeilen erzeugt.

Figur 13 zeigt eine Intensitätsverteilung I(z) eines Kraftfahrzeugscheinwerfers mit zweizeiliger Lichtquelle mit Abblendlichtanteil. Die vertikale, nach oben gerichtete Streuung lässt nur sehr kleine Winkel zu, um ein unerwünschtes Übersprechen weiter unten liegender Segmente in darüber liegende, ausgeschaltete Segmente zu vermeiden. Gleichzeitig wird eine stärkere Streuung nach unten benötigt, um den Übergang zu weiteren Abblendlichtkomponenten weich zu gestalten. Außerdem wird ein homogener Segment-Zeilenübergang angestrebt.

Die vorliegende Erfindung wurde bis hier weitgehend am Beispiel eines Matrix-Kraftfahrzeugscheinwerfers beschrieben. Es versteht sich aber, dass die Verwendung des erfindungsgemäßen Verfahrens nicht auf optische Flächen von Matrix-Kraftfahrzeugscheinwerfern beschränkt ist und dass eine Verwendung für mit Einzellichtquellen arbeitendem Abblendlicht oder generell zum Erzielen einer anisotropen Streuung mit vorbestimmter Intensitätsverteilung innerhalb beliebiger Lichtfunktionen (Abblendlicht, Fernlicht, Teilfernlicht, ...) problemlos möglich ist.

## Patentansprüche

1. Verfahren zur Konstruktion eines optischen Elements (18, 20, 14) für einen Kraftfahrzeugscheinwerfer (10), der ein Gehäuse (12) aufweist, dessen Lichtaustrittsöffnung von einer transparenten Abdeckscheibe abgedeckt (14) wird und in dem eine Lichtquelle (16) angeordnet ist, welches optische Element (18, 20, 14) eine optische Fläche (100) aufweist, die von wenigstens einer Lichtquelle (16) des Kraftfahrzeugscheinwerfers (10) beleuchtbar ist und die das Licht der wenigstens einen Lichtquelle (16) unter Berücksichtigung aller im Strahlengang befindlichen optischen Flächen in eine Ist-Lichtverteilung (22) verteilt, wobei zunächst eine Soll-Lichtverteilung definiert wird, die sich dadurch auszeichnet, dass sie in bestimmten Abstrahlwinkelrichtungen und Entfernungen vorbestimmte Helligkeitswerte besitzt und innerhalb heller Bereiche ein homogenes Erscheinungsbild ohne hellere oder dunkle Linien zwischen einzelnen hellen Bereichen aufweist und wobei entsprechende Daten an einen Rechner übergeben werden, und wobei das Verfahren folgende Schritte aufweist:
- Erstellen eines CAD-Modells der optischen Fläche (100) ;
- Zerlegen des CAD-Modells der optischen Flächen in Teilaperturflächen (50);
- für alle Teilaperturflächen (50) erfolgendes Berechnen von Teillichtverteilungen (52), die von jeweils einer Teilaperturfläche (50) in verschiedenen Bereichen der Lichtverteilung (22) erzeugt werden; **dadurch gekennzeichnet, dass** die folgenden Schritte ausgeführt werden:
- Vorgeben von Oberflächenelementmodellen (60) der optischen Fläche (100), welche Oberflächenelementmodelle (60) eine durch ihre Form bedingte Streucharakteristik in einer ersten Raumrichtung und in einer von der ersten Raumrichtung verschiedenen zweiten Raumrichtung besitzen;
- Zusammenfügen einer Mehrzahl von Oberflächenelementmodellen (60) zu einem wenigstens einen zusammenhängenden Teil der optischen Fläche (100) bedeckenden Ensemble;
- Simulieren einer Ist-Lichtverteilung, die von der optischen Fläche (100) unter Einfluss des Ensembles ausgeht;
- Verändern der Ist-Lichtverteilung als Reaktion auf eine Variation der die Streucharakteristik definierenden Formen der Oberflächenelementmodelle (60) des Ensembles; und
- iteratives Anpassen der Ist-Lichtverteilung an die Soll-Lichtverteilung durch Variieren der die Streucharakteristik definierenden Formen der Oberflächenelementmodelle des Ensembles.

2. Verfahren nach Anspruch 1, wobei bei der Vorgabe der Oberflächenelementmodelle (60) eine spätere Herstellbarkeit dadurch gesichert wird, dass bei der Vorgabe nur Krümmungsradien vorgegeben werden, die bei einer späteren Herstellung des optischen Elements durch Werkzeuge auch eingehalten werden können.

3. Verfahren nach Anspruch 1, wobei ein Vergleich zwischen der definierten Soll-Lichtverteilung und der simulierten Ist-Lichtverteilung erfolgt und dass dann, wenn sich Lichtwerte der Soll-Lichtverteilung und der simulierten Ist-Lichtverteilung um mehr als ein vorbestimmtes Ausmaß unterscheiden, die Oberflächenelementmodelle (60) so verändert werden, dass sich Unterschiede zwischen der definierten Soll-Lichtverteilung und einer dann erneut durch Simulation berechneten Ist-Lichtteilung verringern, und dass diese Schleife aus Simulation, Veränderung und Vergleich wiederholt wird, bis sich eine simulierte Ist-Lichtverteilung ergibt, die mit der Soll-Lichtverteilung übereinstimmt.

4. Verfahren nach einem der vorhergehenden Ansprüche, wobei jedes Oberflächenelementmodell (60) in einer bestimmungsgemäßen Einbaulage eine vertikale Streucharakteristik und eine horizontale Streucharakteristik besitzt.

5. Verfahren nach Anspruch 4, wobei die Streucharakteristiken durch die Form von Begrenzungskurven (54, 56, 58) der Oberflächenelementmodelle (60) festgelegt werden.

6. Verfahren nach Anspruch 5, wobei die Oberflächenelementmodelle (60) durch für horizontale und vertikale Streurichtungen unterschiedliche Begrenzungskurven (54, 56, 58) begrenzt werden.

7. Verfahren nach Anspruch 6, wobei als Begrenzungskurven (54, 56, 58) NURBS- oder andere Spline- oder Bézierkurven verwendet werden.

8. Verfahren nach Anspruch 5 oder 6, wobei , durch Kombination der Begrenzungskurven (54, 56, 58) für die horizontale und für die vertikale Streurichtung eine Fläche entsteht, die ein einzelnes Oberflächenmodellelement (60) für eine als Freiformstruktur verwirklichte Modulation der optischen Oberfläche (100) darstellt

9. Verfahren nach Anspruch 8, wobei das Oberflächenelementmodell (60) eine Modulation eines Teils der optischen Fläche (100) bildet, indem es lokal eine Vertiefung und/oder eine Erhöhung dieses Teils der optischen Fläche (100) bildet.

10. Verfahren nach einem der vorhergehenden Ansprüche, wobei Oberflächenelementmodelle (60) durch Aneinanderreihung in horizontaler und vertikaler Richtung zu einer Gesamtfläche (62) kombiniert werden.

11. Verfahren nach Anspruch 10, wobei die Oberflächenelementmodelle (60) sich dabei nahtlos und mit stetig differenzierbarem Übergang aneinander anschließen.

12. Verfahren nach Anspruch 10 oder 11, wobei gleichzeitig unterschiedliche Typen von Oberflächenelementmodellen (60) auf derselben optischen Fläche (100) verwendet werden.

13. Verfahren nach einem der Ansprüche 10 bis 12, wobei unterschiedliche Oberflächenelementmodelle (60) auf einer optischen Fläche (100) verwendet werden, wobei sie frei positioniert und in frei wählbarer Reihenfolge angeordnet sein können.

14. Verfahren nach Anspruch 12, wobei die unterschiedlichen Typen mindestens C1-stetig differenzierbar ineinander übergehen.

15. Verfahren nach einem der vorhergehenden Ansprüche, wobei eine laterale Ausdehnung der Oberflächenelementmodelle (60) im Bereich von 0,1mm bis zu 5mm liegt und dass die Höhe der Oberflächenelementmodelle(60) von unter einem Mikrometer bis zu einigen hundert Mikrometern, insbesondere von 3 Mikrometern bis 25 Mikrometer reicht.

## Claims

1. Method for constructing an optical element (18, 20, 14) for a motor vehicle headlamp (10) which has a housing (12), the light exit opening of which housing is covered (14) by a transparent cover pane and in which a light source (16) is arranged, which optical element (18, 20, 14) has an optical surface (100) which can be illuminated by at least one light source (16) of the motor vehicle headlamp (10) and which, taking into consideration all optical surfaces located in the beam path, distributes the light of the at least one light source (16) into an actual light distribution (22), a target light distribution first being defined, which is **characterized in that** it has predetermined brightness values in certain emission angle directions and distances and has a homogeneous appearance within bright regions without lighter or dark lines between individual light regions, and corresponding data being transferred to a computer, and the method comprising the following steps:
- creating a CAD model of the optical surface (100);
- dispersing the CAD model of the optical surfaces into partial aperture surfaces (50);
- calculating partial light distributions (52) for all partial aperture surfaces (50), said partial light distributions being generated in different regions of the light distribution (22) by a partial aperture surface (50) in each case; **characterized in that** the following steps are performed:
- specifying surface element models (60) of the optical surface (100), which surface element models (60) have a scattering characteristic, due to their shape, in a first spatial direction and in a second spatial direction different from the first spatial direction;
- joining a plurality of surface element models (60) to form an ensemble covering at least one contiguous part of the optical surface (100);
- simulating an actual light distribution emanating from the optical surface (100) under the influence of the ensemble;
- changing the actual light distribution in response to a variation of the forms of the surface element models (60) of the ensemble defining the scattering characteristic; and
- iteratively adjusting the actual light distribution to the target light distribution by varying the forms of the surface element models of the ensemble defining the scattering characteristic.

2. Method according to claim 1, wherein in the specification of the surface element models (60), a later producibility is ensured in that in the specification only radii of curvature are specified which can also be maintained during later production of the optical element by tools.

3. Method according to claim 1, wherein a comparison between the defined target light distribution and the simulated actual light distribution takes place and in that when light values of the target light distribution and of the simulated actual light distribution differ by more than a predetermined extent, the surface element models (60) are changed such that differences between the defined target light distribution and an actual light division calculated again by simulation are reduced, and such that this loop of simulation, change and comparison is repeated until a simulated actual light distribution results that matches the target light distribution.

4. Method according to any of the preceding claims, wherein each surface element model (60) has, in an intended installation position, a vertical scattering characteristic and a horizontal scattering characteristic.

5. Method according to claim 4, wherein the scattering characteristics are determined by the form of limiting curves (54, 56, 58) of the surface element models (60).

6. Method according to claim 5, wherein the surface element models (60) are limited by different limiting curves (54, 56, 58) for horizontal and vertical scattering directions.

7. Method according to claim 6, wherein NURBS or other spline or Bézier curves are used as limiting curves (54, 56, 58).

8. Method according to claim 5 or claim 6, wherein by combining the limiting curves (54, 56, 58) for the horizontal and for the vertical scattering direction, a surface is produced which represents a single surface model element (60) for a modulation of the optical surface (100) realized as a free-form structure.

9. Method according to claim 8, wherein the surface element model (60) forms a modulation of a part of the optical surface (100) by locally forming a depression and/or an increase of this part of the optical surface (100) .

10. Method according to any of the preceding claims, wherein surface element models (60) are combined to form a total surface (62) by alignment in the horizontal and the vertical direction.

11. Method according to claim 10, wherein the surface element models (60) adjoin one another seamlessly and with a continuously differentiable transition.

12. Method according to claim 10 or claim 11, wherein different types of surface element models (60) are simultaneously used on the same optical surface (100).

13. Method according to any of claims 10 to 12, wherein different surface element models (60) are used on an optical surface (100), wherein they can be freely positioned and arranged in a freely selectable sequence.

14. Method according to claim 12, wherein the different types transition into one another at least with C1-continuous differentiability.

15. Method according to any of the preceding claims, wherein a lateral extension of the surface element models (60) is in the range of 0.1 mm to 5 mm and in that the height of the surface element models (60) ranges from below one micrometer to several hundred micrometers, in particular from 3 micrometers to 25 micrometers.

## Revendications

1. Procédé de construction d'un élément optique (18, 20, 14) pour un phare de véhicule automobile (10) qui comprend un boîtier (12) dont l'ouverture de sortie de lumière est recouverte par une plaque de recouvrement transparente (14) et à l'intérieur duquel est agencée une source de lumière (16), lequel élément optique (18, 20, 14) présente une surface optique (100) qui peut être éclairée par au moins une source de lumière (16) du phare de véhicule automobile (10) et qui distribue la lumière provenant de ladite au moins une source de lumière (16), en tenant compte de toutes les surfaces optiques situées dans le trajet de faisceau, en une distribution de lumière réelle (22), dans lequel, une distribution de lumière cible est définie en premier qui est **caractérisée en ce que** qu'il possède des valeurs de luminosité prédéterminées dans certaines directions d'angle d'émission et distances et présente, dans des zones claires, un aspect homogène sans lignes plus claires ou plus sombres entre des zones claires individuelles, et dans lequel des données correspondantes sont transmises à un ordinateur, et dans lequel le procédé comprend les étapes suivantes consistant à:
- créer un modèle CAO de la surface optique (100);
- décomposer le modèle CAO des surfaces optiques en surfaces d'ouverture partielle (50);
- calculer pour toutes les surfaces d'ouverture partielle (50) des distributions de lumière partielles (52) qui sont générées par respectivement une surface d'ouverture partielle (50) dans différentes zones de la distribution de lumière (22); **caractérisé par le fait que** les étapes suivantes sont mises en œuvre consistant à:
- spécifier des modèles d'éléments de surface (60) de la surface optique (100), lesquels modèles d'éléments de surface (60) présentent une caractéristique de diffusion due à leur forme, dans une première direction spatiale et dans une deuxième direction spatiale différente de la première direction spatiale;
- réunir une pluralité de modèles d'éléments de surface (60) pour former un ensemble couvrant au moins une partie cohérente de la surface optique (100) ;
- simuler une distribution de lumière réelle qui émane de la surface optique (100) sous l'influence dudit ensemble;
- modifier la distribution de lumière réelle en réponse à une variation des formes des modèles d'élément de surface (60) de l'ensemble, qui définissent la caractéristique de diffusion; et
- adapter de façon itérative la distribution de lumière réelle à la distribution de lumière cible en faisant varier les formes des modèles d'éléments de surface de l'ensemble, qui définissent la caractéristique de diffusion.

2. Procédé selon la revendication 1, dans lequel, lors de la spécification des modèles d'éléments de surface (60), une fabricabilité ultérieure est assurée par le fait que, lors de la spécification, on ne spécifie que des rayons de courbure qui peuvent également être observés lors d'une fabrication ultérieure de l'élément optique par des outils.

3. Procédé selon la revendication 1, dans lequel une comparaison est effectuée entre la distribution de lumière cible définie et la distribution de lumière réelle simulée et que si les valeurs de lumière de la distribution de lumière cible et de la distribution de lumière réelle simulée diffèrent de plus d'un degré prédéterminé, les modèles d'éléments de surface (60) soient modifiés de telle sorte que les différences entre la distribution de lumière cible définie et une distribution de lumière réelle recalculée par simulation soient réduites, et que cette boucle de simulation, de modification et de comparaison soit répétée jusqu'à ce qu'il en résulte une distribution de lumière réelle simulée qui correspond à la distribution de lumière cible.

4. Procédé selon l'une quelconque des revendications précédentes, dans lequel chaque modèle d'élément de surface (60) présente dans une position d'installation prévue une caractéristique de diffusion verticale et une caractéristique de diffusion horizontale.

5. Procédé selon la revendication 4, dans lequel les caractéristiques de diffusion sont déterminées par la forme de courbes de délimitation (54, 56, 58) des modèles d'éléments de surface (60).

6. Procédé selon la revendication 5, dans lequel les modèles d'éléments de surface (60) sont délimités par des courbes de délimitation (54, 56, 58) différentes pour des directions de diffusion horizontale et verticale.

7. Procédé selon la revendication 6, dans lequel des courbes NURBS ou d'autres courbes splines ou de Bézier sont utilisées en tant que courbes de délimitation (54, 56, 58).

8. Procédé selon la revendication 5 ou 6, dans lequel une surface est créée en combinant les courbes de délimitation (54, 56, 58) pour la direction de diffusion horizontale et pour la direction de diffusion verticale, laquelle surface représente un seul élément de modèle de surface (60) pour une modulation de la surface optique (60), qui est réalisée en tant que structure de forme libre (100).

9. Procédé selon la revendication 8, dans lequel le modèle d'élément de surface (60) forme une modulation d'une partie de la surface optique (100) en formant localement une dépression et/ou une saillie de cette partie de la surface optique (100).

10. Procédé selon l'une quelconque des revendications précédentes, dans lequel des modèles d'éléments de surface (60) sont combinés en les juxtaposant dans les directions horizontale et verticale pour former une surface globale (62).

11. Procédé selon la revendication 10, dans lequel les modèles d'éléments de surface (60) s'enchaînent sans interruption et avec une transition continûment différentiable.

12. Procédé selon la revendication 10 ou 11, dans lequel différents types de modèles d'éléments de surface (60) sont utilisés simultanément sur la même surface optique (100) .

13. Procédé selon l'une quelconque des revendications 10 à 12, dans lequel différents modèles d'éléments de surface (60) sont utilisés sur une surface optique (100), dans lequel ils peuvent être librement positionnés et être agencés dans un ordre librement choisissable.

14. Procédé selon la revendication 12, dans lequel les différents types se confondent de manière au moins C1-continuellement différentiable.

15. Procédé selon l'une quelconque des revendications précédentes, dans lequel une étendue latérale des modèles d'éléments de surface (60) se situe dans la plage allant de 0,1 mm à 5 mm et que la hauteur des modèles d'éléments de surface (60) va de moins d'un micromètre à quelques centaines de micromètres, en particulier de 3 micromètres à 25 micromètres.
